# EUROPÄISCHE PATENTANMELDUNG

(11) **EP 1 190 617 A1**
(43) Veröffentlichungstag der Anmeldung: **27.03.2002**
(21) Anmeldenummer: 01121884.9
(22) Anmeldetag: 12.09.2001
(51) Int. Cl.: A01F 7/06

(54) **Mähdrescher mit Axialabscheider und Auswurftrommel**

(30) Priorität: 21.09.2000 DE 10047464
(71) Anmelder: DEERE & COMPANY, Moline, Illinois 61265-8098 (US)
(72) Erfinder: Braunhardt, Klaus, 66482 Zweibrücken (DE); Bischoff, Lutz, 66503 Dellfeldt (DE); Weichholdt, Dirk, 57200 Sarreguemines (FR); Dow, Chad A., East Moline, IL 61244 (US); Fisher, Patrick J., 66459 Kirkel-Altstadt (DE)
(74) Vertreter: Holst, Sönke, Dr.

(57) **Zusammenfassung**

Die Erfindung betrifft einen Mähdrescher (10) mit einem Axialabscheider (24) und einer dem Auslass (64) des Axialabscheiders (24) benachbarten, rotativ antreibbaren Auswurftrommel (60), die eingerichtet ist, vom Axialabscheider (24) ausgeworfene Erntegutreste zu fördern. Es wird vorgeschlagen, dass die Auswurftrommel (60) derart vom Auslass (64) des Axialabscheiders (24) beabstandet angeordnet ist, dass sie nur dann in Kontakt mit den Erntegutresten kommt, wenn der Axialabscheider (24) relativ hohe Durchsätze bewältigt.

## Beschreibung

Die Erfindung betrifft einen Mähdrescher mit einem Axialabscheider und einer dem Auslass des Axialabscheiders benachbarten, rotativ antreibbaren Auswurftrommel, die eingerichtet ist, vom Axialabscheider ausgeworfene Erntegutreste zu fördern.

Aus der WO 97/07660 A und der DE 43 13 841 A sind derartige Mähdrescher bekannt. Die Auswurftrommel dient dazu, die Erntegutreste vom Axialabscheider wegzufördern und aus der Auswurfhaube des Mähdreschers auszuwerfen (bei Schwadablage, WO 97/07660 A) oder einem Strohhäcksler zuzuführen (DE 43 13 841 A) .

Dabei ist als nachteilig anzusehen, dass die Auswurftrommeln im Fluss der Erntegutreste angeordnet sind, so dass sie den Fluss der Erntegutreste behindern, wenn sie nicht angetrieben werden. Sie sind daher permanent anzutreiben, auch wenn nur wenig Erntegutreste gefördert werden, und sie daher prinzipiell nicht benötigt werden.

Die der Erfindung zugrunde liegende Aufgabe wird darin gesehen, einen Mähdrescher bereitzustellen, bei dem auswurfseitig stets eine energiesparende Förderung der Erntegutreste möglich ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Auswurftrommel derart vom Auslass des Axialabscheiders beabstandet anzuordnen, dass sie nur dann in Wirkung tritt, wenn der Erntegutrestefluss einen bestimmten Schwellenwert überschreitet. Dadurch muss sie nicht kontinuierlich angetrieben werden, bzw. sie dreht bei geringeren Erntegutresteflüssen frei mit, so dass dann zum Antrieb der Auswurftrommel nur wenig Energie erforderlich ist. Der Schwellenwert kann beispielsweise 75 % des maximal möglichen Erntegutresteflusses betragen.

Die Drehachse der Auswurftrommel ist vorzugsweise etwa in Höhe der Unterseite des Axialabscheiders angeordnet, und in Vorwärtsfahrtrichtung des Mähdreschers hinter dem rückwärtigen Ende des Axialabscheiders angebracht. Dabei dreht sich die dem Axialabscheider zugewandte Seite der Auswurftrommel in der Regel nach unten, um die Erntegutreste nach hinten und/oder unten abzuführen.

Zur Förderung der Erntegutreste weist die Auswurftrommel vorzugsweise Mitnehmer auf, die einen sich radial erstreckenden Teil aufweisen, der die Erntegutreste fördert. Am äußeren Ende des radialen Teils kann ein entgegen der Drehrichtung nach hinten abgewinkelter Teil der Mitnehmer folgen, der verhindert, dass sich an der rückwärtigen Flanke des radialen Teils Erntegutreste ansammeln.

Die Auswurftrommel kann permanent angetrieben werden. Denkbar ist auch, ihren Antrieb manuell ein- und ausschaltbar zu gestalten, was von einer Fahrerkabine aus erfolgen kann. Ihre Drehgeschwindigkeit kann auch variabel sein. Auch ein Gutflusssensor kann zum Ein- und Ausschalten des Drehantriebs der Auswurftrommel Verwendung finden, bzw. ihre Drehzahl steuern.

In der Zeichnung ist ein nachfolgend näher beschriebenes Ausführungsbeispiel der Erfindung dargestellt. Es zeigt:
- Fig. 1: einen Mähdrescher in Seitenansicht und schematischer Darstellung mit einer quer gelagerten Dreschtrommel und einem Axialabscheider mit einer Auswurftrommel, und
- Fig. 2: eine Ansicht der Auswurftrommel.

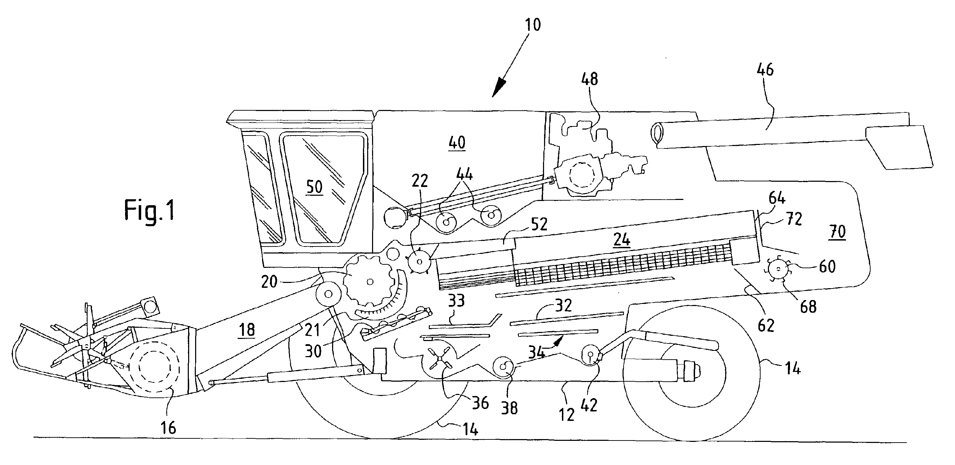

Figur 1 zeigt einen selbstfahrenden Mähdrescher 10 mit einem Tragrahmen 12, der sich über Räder 14 auf dem Boden abstützt und von diesen fortbewegt wird. Die Räder 14 werden mittels nicht gezeigter Antriebsmittel in Drehung versetzt, um den Mähdrescher 10 z. B. über das Feld zu bewegen. An den vorderen Endbereich des Mähdreschers 10 ist eine Erntegutbergungsvorrichtung 16 angeschlossen, um Erntegut von dem Feld zu ernten und es nach oben und hinten durch einen Schrägförderer 18 Dresch- und Abscheidemitteln zuzuführen. Die Dresch- und Abscheidemittel umfassen eine quer angeordnete Dreschtrommel 20 und einen dieser zugeordneten Dreschkorb 21, denen das geerntete Gut zuerst zugeführt wird. Danach wird das Dreschgut einer Abstreifrolle 23 und einer Wendetrommel 22 zugeführt, von wo aus es in einen Axialabscheider 24 gelangt. Es ist aber auch denkbar, die Dreschtrommel 20 wegzulassen und einen Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden.

Getreide und Spreu, die während des Dreschvorgangs abgeschieden werden, fallen auf wenigstens eine Schnecke 30, die beides einem Vorbereitungsboden 33 zuführt. Getreide und Spreu, die hingegen aus dem Axialabscheider 24 austreten, fallen auf einen Schüttelboden 32, der es zur Weitergabe auf den Vorbereitungsboden 33 führt. Der Vorbereitungsboden 33 gibt das Getreide und die Spreu einem Siebkasten 34 weiter, dem ein Gebläse 36 zugeordnet ist, um die Abscheidung der Spreu von dem Getreide zu unterstützen. Gereinigtes Getreide wird mittels einer Körnerschnecke 38 einem nicht gezeigten Elevator zugeführt, der es in einen Korntank 40 befördert. Eine Überkehrschnecke 42 gibt unausgedroschene Ährenteile durch einen weiteren nicht gezeigten Elevator zurück in den Dreschprozess. Schließlich wird das gereinigte Getreide aus dem Korntank 40 durch ein Entladesystem mit Querschnecken 44 und einem Entladeförderer 46 entladen.

All die vorgenannten verschiedenen Systeme werden mittels eines Verbrennungsmotors 48 angetrieben, der von einer Bedienungsperson aus einer Fahrerkabine 50 heraus bedient wird. Die verschiedenen Vorrichtungen zum Dreschen, Fördern, Reinigen und Abscheiden befinden sich innerhalb des Tragrahmens 12.

In der dargestellten Ausführungsform sind die Dreschtrommel 20 und der dieser zugeordnete Dreschkorb 21 mit Stiften besetzt, wie dies zum Dreschen von Reis vorgesehen ist; allerdings kann diese Ausführung auch gegen eine solche ausgetauscht werden, wie sie zum Dreschen anderer Erntegüter verwendet wird. Die Abstreifrolle 23 und die Wendetrommel 22 führen gemeinsam mit einem Zufuhrgehäuse 52 das gedroschene Erntegut von der Dreschtrommel 20 und dem Dreschkorb 21 dem Axialabscheider 24 zu.

Vom Axialabscheider 24 werden ausgedroschene Erntegutreste (Stroh) durch einen rückwärtigen Auslass 64 nach hinten ausgeworfen. Durch die Wirkung der Schwerkraft fallen die Erntegutreste auf ein Strohleitblech 62 und verlassen den Mähdrescher 10 durch eine Öffnung im Boden der Ausfallhaube 70 nach unten und werden als Schwad auf dem Feld abgelegt. Außerdem werden nach hinten ausgeworfene Erntegutreste durch eine dem Auslass 64 gegenüberliegende, in ihrem unteren Bereich nach hinten abgeknickte Rückwand 72 des Gehäuses des Axialabscheiders 24 nach unten geleitet.

Falls der Axialabscheider nicht relativ hohe Gutdurchsätze zu bewältigen hat, fallen die Erntegutreste aus dem Auslass 64, gegebenenfalls durch die Rückwand 72 geführt, nach unten auf das Strohleitblech 62 und von dort auf den Erdboden. Bei relativ hohen Gutdurchsätzen können sich die Erntegutreste jedoch zwischen dem Auslass 64 und dem Strohleitblech 62 stauen. In Vorwärtsfahrtrichtung hinter der Unterseite des Auslasses 64 ist daher eine Auswurftrommel 60 mit um ihren Umfang verteilten, sich axial erstreckenden Mitnehmern 68 angeordnet. Ihre Achse ist etwa in Höhe der Unterseite des Axialabscheiders 24 angeordnet. Die Auswurftrommel 60 ist rotativ antreibbar und dreht sich dann in Figur 1 im Gegenuhrzeigersinn. Die dem Axialabscheider 24 zugewandte Seite der Auswurftrommel 60 dreht sich somit nach unten. Die Auswurftrommel 60 dient dazu, sicherzustellen, dass die Erntegutreste am Strohleitblech 62 entlang nach unten gefördert werden. Sie ist derart oberhalb und in Fahrtrichtung hinter dem Materialstrom der Erntegutreste angeordnet, dass sie nur dann in Kontakt mit den Erntegutresten kommt, wenn relativ hohe Durchsätze zu bewältigen sind. Sie kann kontinuierlich oder nur im Bedarfsfall (bei hohen Durchsätzen) angetrieben werden, wobei sie durch einen Bediener in der Fahrerkabine 50 oder durch einen entsprechenden Sensor in Betrieb gesetzt wird.

Anzumerken ist, dass das Strohleitblech 62 in an sich bekannter Weise um eine an seinem unteren Ende angeordnete, quer zur Fahrtrichtung angeordnete, horizontale Achse schwenkbar angeordnet sein kann, so dass es zwischen der in Figur 1 dargestellten Schwadablage-Position und einer Häckselposition, in der es nach hinten umgeklappt ist, verschwenkbar ist. In der Häckselposition werden die Erntegutreste einem Strohhäcksler zugeführt, dort zerkleinert und auf dem Erdboden verteilt.

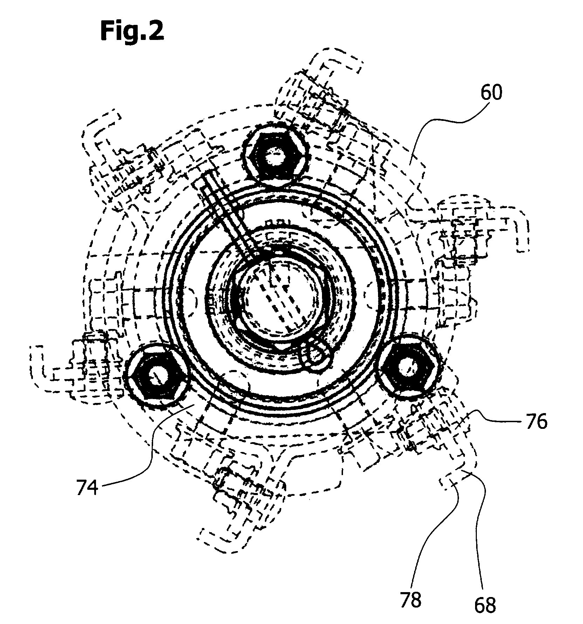

In Figur 2 ist die Auswurftrommel 60 detaillierter dargestellt. Sie besteht aus einem zentralen Rohr 74, um dessen Umfang sechs Mitnehmer 68 verteilt sind. Die Mitnehmer 68 weisen einen sich einen vom Rohr 74 etwa radial nach außen erstreckenden Teil 76 und einen entgegen der Drehrichtung nach hinten abgewinkelten, äußeren Teil 78 auf. Jeweils zwei benachbarte Mitnehmer 68 sind durch tangential zum Rohr verlaufende, sich durch die radial erstreckenden Teile 76 verlaufende Schrauben aneinander befestigt, und durch andere Schrauben am Rohr 74 fixiert. Die nach hinten abgewinkelten, äußeren Teile 78 verhindern unerwünschte Materialansammlungen an der nachlaufenden Rückseite der Mitnehmer 68.

## Patentansprüche

1. Mähdrescher (10) mit einem Axialabscheider (24) und einer dem Auslass (64) des Axialabscheiders (24) benachbarten, rotativ antreibbaren Auswurftrommel (60), die eingerichtet ist, vom Axialabscheider (24) ausgeworfene Erntegutreste zu fördern, **dadurch gekennzeichnet, dass** die Auswurftrommel (60) derart vom Auslass (64) des Axialabscheiders (24) beabstandet angeordnet ist, dass sie nur dann in Kontakt mit den Erntegutresten kommt, wenn der Fluss der Erntegutreste über einem Schwellenwert liegt.

2. Mähdrescher (10) nach Anspruch 1, **dadurch gekennzeichnet, dass** die Drehachse der Auswurftrommel (60) etwa in Höhe der Unterseite des Axialabscheiders (24) angeordnet ist.

3. Mähdrescher (10) nach Anspruch 1 oder 2, **dadurch gekennzeichnet, dass** die Drehachse der Auswurftrommel (60) in Vorwärtsfahrtrichtung hinter dem Axialabscheider (24) angeordnet ist.

4. Mähdrescher (10) nach einem der Ansprüche 1 bis 3, **dadurch gekennzeichnet, dass** sich die dem Axialabscheider (24) zugewandte Seite der Auswurftrommel (60) nach unten dreht.

5. Mähdrescher (10) nach einem der Ansprüche 1 bis 4, **dadurch gekennzeichnet, dass** die Auswurftrommel (60) Mitnehmer (68) aufweist, die einen sich etwa radial nach außen erstreckenden Teil (76) und einen äußeren, entgegen der Drehrichtung nach hinten abgewinkelten Teil (78) aufweisen.

6. Mähdrescher (10) nach einem der Ansprüche 1 bis 5, **dadurch gekennzeichnet, dass** der Antrieb der Auswurftrommel (60) ein- und ausschaltbar ist, insbesondere manuell oder durch einen Gutflusssensor.
